# EUROPÄISCHE PATENTANMELDUNG

(11) **EP 0 886 448 A2**
(43) Veröffentlichungstag der Anmeldung: **23.12.1998**
(21) Anmeldenummer: 98440129.9
(22) Anmeldetag: 17.06.1998
(51) Int. Cl.: H04Q 3/00

(54) **Verbindungsaufbauverfahren sowie Vermittlungsstelle und Kommunikationsnetz**

(30) Priorität: 19.06.1997 DE 19726004
(71) Anmelder: Alcatel Alsthom Compagnie Generale d'Electricité, 75088 Paris (FR)
(72) Erfinder: Lautenschlager, Wolfgang, 71287 Weissach-Flacht (DE); Krank, Lothar, 71229 Leonberg (DE); Stahl, Uwe, 71229 Leonberg (DE)
(74) Vertreter: Zinsinger, Norbert

(57) **Zusammenfassung**

Die Erfindung betrifft ein Verfahren zum Aufbau einer Verbindung zwischen einem rufenden Teilnehmer (A) und einem gerufenen Teilnehmer sowie eine Vermittlungsstelle (EX1 ) und ein Kommunikationsnetzes zur Durchführung dieses Verfahrens. Zum Aufbau der Verbindung wird eine Verbindungsanforderung von einem Endgerät (TE1) des rufenden Teilnehmers (A) an die Vermittlungsstelle (EX1 ) des Kommunikationsnetzes geleitet. Die Vermittlungsstelle (EX1 ) greift für die Bestimmung des Leitweges zu dem gerufenen Teilnehmer (B) auf eine für mehrere Vermittlungsstellen zentrale erste Steuereinheit (SCP) zu, die eine erste Prozedur für die Bestimmung des Leitweges durchführt und das Ergebnis an die Vermittlungsstelle (EX1 ) zurückmeldet. Die Vermittlungsstelle (EX1 ) überwacht den Ausfall der zentralen ersten Steureinheit (SCP) oder der Verbindung zu der zentralen ersten Steuereinheit (SCP). Wenn sie einen derartigen Ausfall detektiert, greift sie für die Bestimmung des Leitweges auf eine in der Vermittlungsstelle (EX1 ) integrierte zweite Steuereinheit (PROZ2) zu, die anstelle der ersten Prozedur eine alternative zweite Prozedur für die Bestimmung des Leitweges durchführt.

## Beschreibung

Die Erfindung betrifft ein Verfahren zum Aufbau einer Verbindung zwischen einem rufenden und einem gerufenen Teilnehmer nach dem Oberbegriff von Anspruch 1, eine Vermittlungsstelle eines Kommunikationsnetzes nach dem Oberbegriff von Anspruch 12 und ein Kommunikationsnetz mit mindestens einer Vermittlungsstelle nach dem Oberbegriff von Anspruch 13.

Bei den heute üblichen Verbindungsaufbauverfahren wird eine Verbindungsanforderung mittels einer in ihr eingetragenen Rufnummer des gerufenen Teilnehmers zum Teilnehmeranschluß des gerufenen Teilnehmers geleitet. Die Rufnummer gibt hierbei den Weg durch das Kommunikationsnetz vor und wird bei dem Weg durch das Kommunikationsnetz Schritt für Schritt von Vermittlungsstellen ausgewertet, d. h. sie adressiert beispielsweise zuerst den Ortsnetzbereich, dann die Teilnehmervermittlungsstelle und dann den Teilnehmeranschluß des gerufenen Teilnehmers innerhalb des Nummerierungsbereiches der Teilnehmervermittlungsstelle. Die Auswertung der Rufnummer und die Leitweglenkung, d. h. die Bestimmung des Verbindungsweges zwischen rufenden und gerufenen Teilnehmer wird hierbei durch die Steuerungen der an dem Verbindungsaufbau beteiligten Vermittlungsstellen gesteuert.

Die Erfindung geht nun von einem Verbindungsaufbauverfahren in einer deregulierten Netzumgebung aus, wie es im Bericht,,High level service description for number portability" der "Public Network Operators - Interest Group", 29 Juni 1994, als mögliche Lösung für die Realisierung der Rufnummernportabilität im Vereinigten Königreich (UK) vorgeschlagen wird.

Ein derartiges Verbindungsaufbauverfahren ist notwendig, wenn sich die Teilnehmeranschlußnetze verschiedener Netzbetreiber den Rufnummernbereich eines Teilnehmeranschlußbereiches teilen und die Forderung der Rufnummernportabilität besteht. Rufnummernportabilität bedeutet hier, daß ein Teilnehmer den Teilnehmeranschlußnetz-Betreiber in seinem Teilnehmeranschlußnetzbereich wechseln kann und hierbei seine Rufnummer zu dem neuen Netzbetreiber mitnehmen kann. Dies hat zur Folge, daß keine fixe, aus der Rufnummer erkennbare Zuordnung zwischen Teilnehmeranschlußnetz und Rufnummer eines gerufenen Teilnehmers mehr besteht.

Rufnummernportabilität wird bei diesem Verbindungsaufbauverfahren durch Umwertung der Rufnummer mittels eines für die Vermittlungsstellen eines Teilnehmeranschlußnetzes zentralen IN-Dienstes (IN = Intelligent Network) realisiert. Wechselt ein Teilnehmer innerhalb eines Orstnetzbereiches von einem ersten Netzbetreiber zu einem zweiten Netzbetreiber und will seine Rufnummer mitnehmen, so wird eine entsprechende Anrufweiterleitung mittels diesem IN-Dienst installiert. Auf diesen IN-Dienst greifen dann die Vermittlungsstellen des Teilnehmeranschlußnetz bei jeder ankommenden Verbindungsanforderung zu. Der IN-Dienst bestimmt sodann, ob und an welche Rufnummer die ankommende Verbindungsanforderung weiterzuleiten ist.

Ein Nachteil dieser Lösung ist, daß bei jeder ankommenden Verbindungsanforderung ein Zugriff auf eine zentrale Einheit, nämlich den IN-Dienst, zu erfolgen hat. Ein Ausfall dieser zentralen Einheit würde einen Verbindungsaufbau zu einer Vielzahl von Teilnehmern unmöglich machen.

Der Erfindung liegt nun die Aufgabe zugrunde, die Ausfallsicherheit des Verbindungsaufbaus in einem Kommunikationssystem zu verbessern, in dem am Verbindungsaufbau mindestens eine für mehrere Vermittlungsstellen zentrale Steuereinheit beteiligt ist.

Diese Aufgabe wird gelöst durch ein Verfahren zum Aufbau einer Verbindung zwischen einem rufenden und einem gerufenen Teilnehmer nach der Lehre von Anspruch 1 sowie durch eine Vermittlungsstelle und ein Kommunikationsnetz nach der Lehre von Anspruch 12 bzw. 13.

Der Grundgedanke der Erfindung besteht darin, in einer Vermittlungsstelle eine zusätzliche Funktionalität vorzusehen, die einen Ausfall der zentralen Einheit oder der Verbindung zu der zentralen Einheit erkennt und dann auf eine alternative Leitweglenkungsprozedur umschalten, die in der Vermittlungsstelle integriert ist.

Dieser Ansatz stellt eine sehr hohe Ausfallsicherheit sicher, die im Regelfall höher ist als beispielsweise das Bereitstellen von Redundanz für zentrale Komponenten.

Die Erfindung ist hierbei nicht nur für den Verbindungsaufbau in dem oben beschriebenen deregulierten Kommunikationssystem verwendbar, sondern generell für alle Verbindungsaufbauverfahren, die eine für mehrere Vermittlungsstellen zentrale Steuereinheit für Leitweglenkungs-Funktionen verwenden. Solche zentralen Steuereinheiten werden beispielsweise beim UPT - Konzept (UPT = Universal Personal Telecomunication) verwendet, um eine logische Teilnehmerrufnummer in eine physikalische Netzadresse umzuwerten. Weitere Beispiele für solche zentralen Steuereinheiten sind Dienststeuereinheiten für Freephone-Dienste, Universal-Number-Dienste, VPN-Dienste oder Notruf-Dienste.

Bei der alternativen Leitweglenkungsprozedur handelt es sich vorzugsweise um eine einfache und dafür weniger komfortabl oder kostenintensive Leitweglenkungsprozedur, die einen Notbetrieb aufrechterhalten kann. Eine solche einfache, wenig komplexe Leitweglenkungsprozedur, die beispielsweise kein aufwendiges Datenbanksystem benötigt, kann mit geringem Aufwand in jede der Vermittlungsstellen integriert werden. Da sie nur in einer geringen Zahl von Fällen wirklich in Anspruch genommen wird, fallen ihre weniger komfortabl Funktionsweise oder die mit ihrer Durchführung verbundenen Kosten nicht ins Gewicht. Damit ist das erfindungsgemäße Verfahren kostengünstiger zu realisieren als beispielsweise das Bereitstellen von Redundanz für zentrale Komponenten.

Im Folgenden wird die Erfindung anhand zweier Ausführungsbeispiele unter Zuhilfenahme beiliegender Zeichnungen erläutert.
- Fig. 1: zeigt einen Ausschnitt aus einem Blockschaltbild eines deregulierten Kommunikationssystem mit einem erfindungsgemäßen Kommunikationsnetz.
- Fig. 2: zeigt ein Blockschaltbild mit einer erfindungsgemäßen Vermittlungsstelle, die Teil des erfindungsgemäßen Kommunikationsnetzes nach Fig. 1 ist.

In dem ersten Ausführungsbeispiel wird nun die Durchführung des erfindungsgemäßen Verbindungsaufbauverfahrens in einer deregulierten Kommunikationsumgebung in einem Kommunikationsnetz mit einer oder mit mehreren erfindungsgemäßen Vermittlungsstellen erläutert.

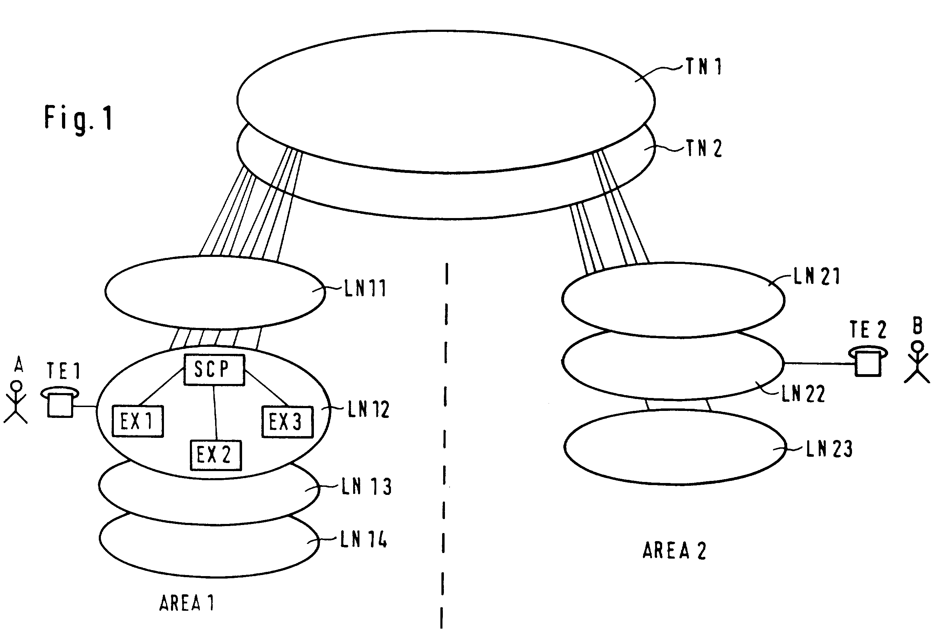

Fig. 1 zeigt einen Ausschnitt aus einem Kommunikationssystem mit zwei Kommunikationsnetzen TN1 und TN2 und sieben Teilnehmeranschlußnetzen LN11 bis LN23. Über die Teilnehmeranschlußnetze LN11 bis LN14 und LN21 bis LN23 sind die Endgeräte eines Teilnehmeranschlußbereiches AREA1 bzw. eines Teilnehmeranschlußbereiches AREA2 angeschlossen. Von diesen angeschlossenen Endgeräten sind hier nur die Endgeräte TE1 und TE2 eines Teilnehmers A bzw. B beispielhaft gezeigt. Das Endgerät TE1 ist hierbei mit dem Teilnehmeranschlußnetz LN12 und das Endgerät TE2 mit dem Teilnehmeranschlußnetz LN22 verbunden.

Die Kommunikationsnetze TN1 bis TN2 stellen Fernnetze dar, die dem Bereitstellen von Fernsprech-Verbindungen zwischen Vermittlungsstellen dienen. Die Kommunikationsnetze TN1 bis TN2 sind jeweils mit den Teilnehmeranschlußnetzen LN11 bis LN14 und LN21 bis LN23 des Teilnehmeranschlußbereiches AREA1 bzw. AREA2 verbunden, so daß Verbindung zwischen Teilnehmeranschlußnetzen verschiedener Teilnehmeranschlußbereiche über jedes der Kommunikationsnetze TN1 bis TN2 aufgebaut werden können.

Es ist auch möglich, daß die Teilnehmeranschlußnetze LN11 bis LN23 lediglich mit einem Fernnetz verbunden sind und somit keine Wahlmöglichkeit in Bezug auf ein Fernnetz und damit in Bezug auf einen Fernnetzbetreiber besteht.

Bei den Teilnehmeranschlußnetzen LN11 bis LN23 handelt es sich um übliche Anschlußnetze für den Anschluß von Fernsprechendgeräten und Nebenstellenanlagen. Mögliche Fernsprechendgeräte sind hierbei Telefone, Faxgeräte, aber auch Modems und Schnittstellenkarten für den Anschluß von Datenverarbeitungsanlagen. Es kann sich hierbei sowohl um analoge als auch um ISDN-Endgeräte (ISDN = Integrated Services Digital Network) handeln.

Bei den Endgeräten TE1 und TE2 handelt es sich um solche Endgeräte.

Die Teilnehmeranschlußnetze LN 11 bis LN23 enthalten jeweils eine oder mehrere Teilnehmervermittlungsstellen. Von den Vermittlungsstellen der Teilnehmeranschlußnetze LN11 bis LN23 sind hier beispielhaft drei Vermittlungsstellen EX1 bis EX3 gezeigt, die Teil des Teilnehmeranschlußnetzes LN12 sind. Alle Endgeräte von Teilnehmern, die einem der Teilnehmeranschlußnetze LN11 bis LN23 zugeordnet sind, sind über Teilnehmeranschlußleitungen mit solch einer Teilnehmervermittlungsstelle des jeweiligen Teilnehmeranschlußnetzes verbunden. Größere Teilnehmeranschlußnetze können aufgrund der höheren Verkehrsbelastung auch Transitvermittlungsstellen enthalten. Die Vermittlungsstellen eines Teilnehmeranschlußnetzes sind über Querleitungen untereinander und mit einer oder mit mehreren Transitvermittlungsstellen der Kommunikationsnetze TN1 bis TN2 verbunden.

Es ist auch möglich, daß Vermittlungsstellen der Teilnehmeranschlußnetze LN11 bis LN14 oder LN21 bis LN23 über Querleitungen miteinander verbunden sind.

Es ist auch möglich, daß es sich bei den Teilnehmeranschlußnetzen LN 11 bis LN23 um Funknetze handelt, beispielsweise nach dem GSM-Standard (GSM = Global System for Mobile Communications) oder nach dem DECT-Standard (DECT = Digital Enhanced Cordless Telephone). Solche Funk-Schnittstellen können auch Bestandteil eines oder mehrerer Vermittlungsstellen eines der Teilnehmeranschlußnetze LN11 bis LN23 sein, d. h. lediglich ein Teil der Teilnehmer dieses Teilnehmeranschlußnetzes ist über ein oder mehrere Funknetze angeschlossen.

Die Teilnehmeranschlußnetze LN11 bis LN14 und LN21 bis LN23 sind unterschiedlichen Netzbetreibern zugeordnet. Da sie denselben Teilnehmeranschlußbereich AREA1 bzw. AREA2, beispielsweise denselben Ortsnetzbereich, abdecken, teilen sich die Teilnehmeranschlußnetze LN11 bis LN14 bzw. LN21 bis LN23 den Nummerierungsbereich des Teilnehmeranschlußbereichs AREA1 bzw. AREA2. Die Teilnehmeranschlußnetze LN11 bis LN14 und LN21 bis LN23 stehen somit parallel zueinander im selben geographischen Gebiet unter derselben Ortsnetzkennung den dort ansässigen Teilnehmern zur Verfügung. Die Teilnehmer können damit auswählen, über welches der Teilnehmeranschlußnetze LN11 bis LN14 bzw. LN21 bis LN23 ihr Endgerät angeschlossen ist und durch diese Wahl den Teilnehmeranschlußnetzbetreiber und damit die für den Teilnehmeranschluß geltenden Konditionen festlegen.

Bei den Vermittlungsstellen EX1 bis EX3 handelt es sich um Vermittlungsstellen, die die Funktion von Dienstvermittlungsstellen erfüllen. Bei Empfang einer Verbindungsanforderung mit einer speziellen Dienstekennung als Rufnummer oder generell bei Empfang von Verbindungsanforderungen von bestimmten oder von allen Endgeräten greifen sie auf eine zentrale Steuereinheit SCP zu, die dann Funktionen für die weitere Leitweglenkung der Verbindungsanforderung und damit für den Verbindungsaufbau erbringt. Die Steuereinheit SCP ist hierbei Teil des Teilnehmeranschlußnetzes LN12 und als zentrale Steuereinheit mit allen Vermittlungsstellen des Teilnehmeranschlußnetzes LN12 verbunden, die die Funktion einer Dienstvermittlungsstelle erfüllen. Solche Dienstvermittlungsstellen können hierbei Teilnehmervermittlungsstellen, aber auch Transitvermittlungsstellen sein.

Es ist auch möglich, daß das Teilnehmeranschlußnetz LN12 über zwei oder mehr zentrale Steuereinheiten SCP verfügt, die jeweils mit einer Untergruppe der Dienstvermittlungsstellen des Teilnehmeranschlußnetzes LN12 verbunden sind. Eine weitere Möglichkeit ist, daß eine zentrale Steuereinheit bereitsteht, die mit Dienstvermittlungsstellen zwei oder mehrerer Teilnehmeranschlußnetze verschiedener Netzbetreiber verbunden ist. Eine solche zentrale Steuereinheit kann hierbei von einem unabhängigen Steuereinheit-Betreiber betrieben werden, der seine Dienstleistung mit den verschiedenen Netzbetreibern verrechnet.

Es ist vorteilhaft, daß die funktionelle Zusammenarbeit zwischen den Vermittlungsstellen EX1 bis EX3 und der zentralen Steuereinheit SCP gemäß der IN-Architektur (IN = Intelligent Network) erfolgt, wobei die Vermittlungsstellen EX1 bis EX3 die Rolle von Dienstvermittlungsstellen (service switching point) und die zentrale Steuereinheit SCP die Rolle einer Dienststeuereinrichtung (service control point) einnehmen.

Im Folgenden wird beispielhaft der Aufbau einer Verbindung zwischen dem Teilnehmer A und dem Teilnehmer B beschrieben.

Der Teilnehmer A wählt eine dem Teilnehmer B zugeordnete logische Rufnummer. Diese logische Rufnummer wird vom Endgerät TE1 in einer Verbindungsanforderung an das Teilnehmeranschlußnetz LN12 gesendet und dort automatisch zu der Vermittlungsstelle EX1 geleitet.

Die Vermittlungsstelle EX1 richtet bei Empfang dieser Verbindungsanforderung eine Anfrage mit der logischen Rufnummer an die zentrale Steuereinheit SCP, die aus der logischen Rufnummer die physikalische Rufnummer ermittelt, unter der der Teilnehmer B erreichbar ist. Diese physikalische Rufnummer kann hierbei einfach aus einer anderen Rufnummer bestehen, wenn die Rufnummernportabilität mittels Rufumleitung realisiert ist.

Es sind jedoch auch andere physikalischen Rufnummern denkbar: Beispielsweise kann die physikalische Rufnummer aus der logischen Rufnummer und eine Betreiberkennung für den Betreiber des Ziel-Teilnehmeranschlußnetzes bestehen.

Die von der zentralen Steuereinheit SCP ermittelte physikalische Rufnummer wird sodann von der Vermittlungsstelle EX1 in die Verbindungsanforderung anstelle der logischen Rufnummer eingefügt. Der Verbindungsaufbau zum Endgerät TE2 erfolgt sodann auf die übliche Weise durch sukzessives Auswerten der Verbindungsanforderung, die nun die durch die zentrale Steuereinheit SCP ermittelten physikalischen Rufnummmer enthält.

Es ist auch möglich, daß die Umwertung der logischen Rufnummer in die physikalische Rufnummer durch eine Dienstvermittlungsstelle eines der Kommunikationsnetze TN 1 oder TN2 oder durch eine Dienstvermittlungsstelle eines der Teilnehmeranschlußnetze LN21 bis LN23 des Ziel-Teilnehmeranschlußbereichs AREA2 erfolgt. Diese Dienstvermittlungsstelle würde hierbei auf die selbe Weise wie die Dienstvermittlungsstelle EX1 mit einer für mehrere Dienstvermittlungsstellen zentralen Steuereinheit zusammenarbeiten, die wie die Steuereinheit SCP ausgestaltet ist.

Jede der Vermittlungsstellen EX1 bis EX2 überwacht, ob die zentrale Steuereinheit SCP und die Verbindung zur zentralen Steuereinheit SCP betriebsbereit ist. Wird ein Ausfall der zentralen Steuereinheit SCP oder der Verbindung erkannt, so schaltet die entsprechende der Vermittlungsstellen EX1 bis EX3 auf eine alternative interne Leitweglenkungsprozedur um. Diese interne Leitweglenkungsfunktion steuert sodann die Ermittlung der physikalischen Rufnummer des Endgerätes TE2.

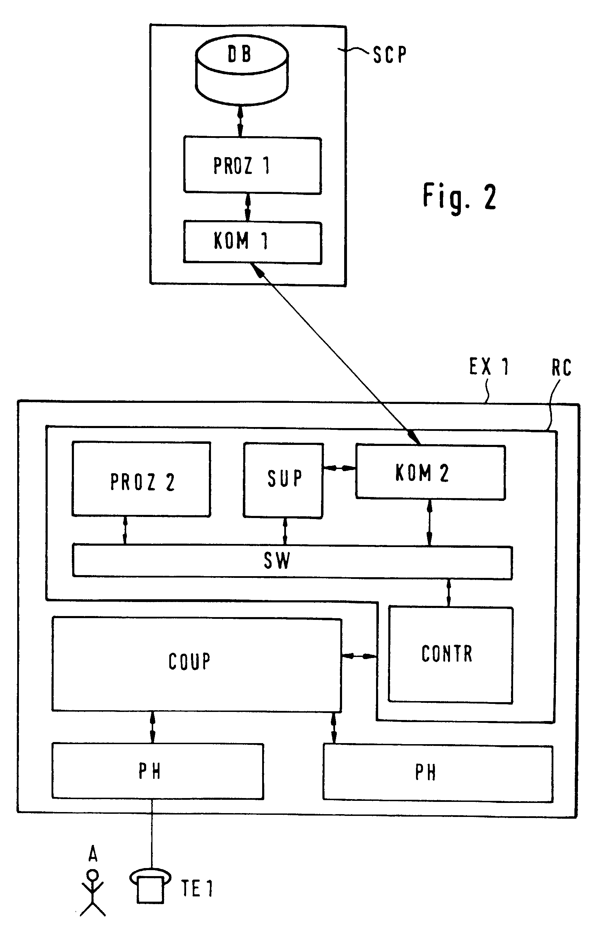

Im folgenden wird nun beispielhaft die detaillierte Funktion der Vermittlungsstelle EX1 und der zentralen Steuereinheit SCP anhand von Fig. 2 erläutert.

Fig. 2 zeigt die zentrale Steuereinheit SCP, die Vermittlungsstelle EX1 und das Endgerät TE1.

Die Steuereinheit SCP weist eine Kommunikationseinheit KOM1, eine Funktionseinheit PROZ1 und eine Datenbank DB auf.

Die Kommunikationseinheit KOM1 umfaßt alle soft- und hardwaremäßigen Funktionen für die Kommunikation mit den Dienstvermittlungsstellen EX1 bis EX3, vorteilhafter Weise gemäß der IN-Architektur.

Die Datenbank DB enthält Daten, die den logischen Rufnummern sämtlich Teilnehmer von deregulierten Teilnehmeranschlußbereichen, beispielsweise den Teilnehmeranschlußbereichen AREA1 und AREA2, jeweils eine oder mehrere physikalische Rufnummern zuordnen.

Die Funktionseinheit PROZ1 führt eine Prozedur aus, die mittels der Datenbank DB zu einer über die Kommunikationseinheit KOM1 in einer Anforderung empfangenen logische Rufnummer deren physikalische Rufnummer ermittelt und diese sodann über die Kommunikationseinheit an diejenige Vermittlungsstelle der Vermittlungsstellen EX1 bis EX3 zurückgibt, von der aus die Anforderung mit der logischen Rufnummer gesendet wurde. Zur Zuweisung der physikalischen Rufnummer wird hierbei die Datenbank nach der empfangenen logischen Rufnummer mittels eines Suchalgorithmuses durchsucht und sodann die zugeordnete physikalische Rufnummer ausgewertet.

Die Vermittlungsstelle EX1 weist zwei Anschlußeinheiten PH, ein Koppel netz COUP und eine für die Leitweglenkung zuständigen Steuerung RC auf.

Die Anschlußeinheiten PH stellen Funktionen bereit, die den Teilnehmeranschluß von Endgeräten und insbesondere den Anschluß von Querleitungsbündeln zu anderen Vermittlungsstellen ermöglichen. Über die Anschlußeinheiten PH sind beispielsweise die Vermittlungsstellen EX2 bis EX3 und Vermittlungsstellen der Kommunikationsnetze TN1 und TN2 über Querleitungsbündel mit der Vermittlungsstelle EX1 verbunden.

Die Anschlußeinheiten PH und die Steuerung RC tauschen über das Koppelnetz COUP Daten aus.

Die Steuerung RC steuert das Koppel netz COUP. Sie weist zwei Steuereinheiten CONTR und PROZ2, eine Kommunikationseinheit KOM2, eine Überwachungseinheit SUP und eine Umschalteeinheit SW auf.

Die Steuereinheiten CONTR und PROZ2, die Überwachungseinheit SUP und die Umschalteeinheit SW bestehen aus Steuerprogrammen, die auf der Datenverarbeitungsplattform der Vermittlungsstelle EX1 ablaufen.

Die Kommunikationseinheit KOM2 stellt analog zur Kommunikationseinheit KOM1 die Kommunikationsfunktionen für die Kommunikation mit der Steuereinheit SCP bereit.

Die Steuereinheit CONTR führt die eigentliche Steuerung des Verbindungsaufbaus über die Vermittlungsstelle EX1 durch. Sie überwacht die an der Vermittlungsstelle EX1 ankommenden Verbindungsanforderungen auf Verbindungsanforderungen mit einer umzuwertenden logischen Rufnummer. Erkennt sie eine solche Verbindungsanforderung, so sendet sie eine Anforderung zur Ermittlung der zugehörigen physikalischen Rufnummer über die Kommunikationseinheit KOM2 an die Steuereinheit SCP oder direkt an die in die Steuerung RC integrierte Steuereinheit PROZ2. Diejenige dieser beiden Steuereinheiten, an die die Anforderung gesendet wird und die somit die Prozedur für die Ermittlung der physikalischen Rufnummer durchführt, wird hierbei von der Umschalteeinheit SW bestimmt.

Es ist auch möglich, daß jede an der Vermittlungsstelle EX1 ankommende Verbindungsanforderung das Senden einer Anforderung auslöst und die Steuereinheit SCP erkennt, ob es sich um eine umzuwertende Rufnummer handelt. Weiter ist es möglich, daß die Verbindungsanforderung erst normal durch das Teilnehmeranschlußnetz geleitet wird und erst, wenn erkannt wird, daß kein normaler Teilnehmer unter der Rufnummer erreichbar ist, die Verbindungsanforderung zur Vermittlungsstelle EX1 geleitet und eine Anfrage an die Dienststeuereinheit SCP gerichtet wird (query on release).

Die Steuereinheit CONTR unterstützt im weiteren die Steuereinheit SCP bzw. PROZ2 bei der Durchführung der jeweiligen Prozedur, beispielsweise durch Eintragen der ermittelten physikalischen Rufnummer in die Verbindungsanforderung und das weiterleiten der Verbindungsanforderung mit der physikalischen Rufnummer zum Zwecke des Verbindungsaufbaus.

Die Steuereinheit PROZ2 führt eine zweite, von der Prozedur der Funktionseinheit PROZ1 unterschiedliche Prozedur zur Ermittlung der physikalischen Ziel-Rufnummer durch.

Eine erste Möglichkeit für eine solche Prozedur ist, daß die Steuereinheit PROZ2 eine Verbindung zurück zum Endgerät TE1 aufbaut und den Teilnehmer A auffordert, weitere Informationen zur physikalischen Rufnummer des Endgerätes TE2 einzugeben. Die Aufforderung und die Verwertung der vom Teilnehmer eingegebenen Daten kann hier beispielsweise über einen aufgebauten Nutzkanal mittels einer Sprachansage und einer Spracherkennungseinheit auf Seiten der Steuereinheit PROZ2 erfolgen. Es ist jedoch auch möglich daß hierfür eine Kommunikation über eine Signalisierungskanal erfolgt, beispielsweise durch Aufforderung zur Wahl weiterer Ziffern oder durch Versenden von Textnachrichten über den ISDN-D-Kanal.

Weitere Informationen über die physikalische Rufnummer kann beispielsweise die Betreiberkennung (carrier selection) sein, mittels der dann direkt durch Hinzufügen der logischen Rufnummer die physikalische Rufnummer gebildet wird. Es ist auch möglich, dem Teilnehmer A eine direkt Eingabe der physikalische Rufnummer zu ermöglichen oder aus der Betreiberkennung oder anderen Angaben zu dem Teilnehmer B die physikalische Rufnummer zu berechnen.

Eine Prozedur gemäß dieser ersten Möglichkeit kommt ohne eine aufwendige Datenbank aus und ist somit leicht auf der Plattform der Vermittlungsstelle EX1 zu implementieren. Im Vergleich zur Prozedur der Steuereinheit SCP ist die bedienungsfreundlichkeit jedoch eingeschränkt, was jedoch aufgrund der geringen Nutzungswahrscheinlichkeit nicht ins Gewicht fällt.

Eine zweite Möglichkeit für solch eine Prozedur besteht darin, daß diese die Verbindungsanforderung zu einer Dienstvermittlungsstelle umleitet, die mit einer anderen zentralen Steuereinheit verbunden ist. Eine vorteilhafte Prioritätsreihenfolge für solch eine Umleitung ist, zuerst eine Umleitung zu einer Dienstvermittlungsstelle desselben Teilnehmeranschlußnetzes LN12 zu versuchen und erste dann eine Umleitung zu einer Dienstvermittlungsstelle eines Teilnehmeranschlußnetzes oder eines Fernnetzes eines anderen Netzbetreibers durchzuführen.

Durch ein Vorgehen gemäß der zweiten Möglichkeit wird die Bedienungsfreundlichkeit nicht eingeschränkt, es kann jedoch zu Überlastung von zentralen Steuereinheiten und zu finanziellen Mehrkosten für den Netzbetreiber des Teilnehmeranschlußnetzes LN12 kommen, was jedoch ebenfalls aufgrund der geringen Nutzungswahrscheinlichkeit nicht ins Gewicht fällt.

Eine dritte Möglichkeit für solch eine Prozedur besteht darin, daß mehrfach versuchsweise ein Verbindungsaufbau zu möglichen physikalischen Rufnummern veranlaßt wird. Es wird beispielsweise nacheinander versucht, die Verbindung zu dem Teilnehmer B über die Teilnehmeranschlußnetze LN21 bis LN23 des Ziel-Teilnehmeranschlußbereich AREA2 aufzubauen. Der Ziel-Teilnehmeranschlußbereich ergibt sich aus der logischen Rufnummer des Teilnehmers B. In der Steuereinheit PROZ2 müssen somit nur Daten über die Betreiberkennungen der in diesem Ziel-Teilnehmeranschlußbereich vorhandenen Teilnehmeranschlußnetze gespeichert sein, um die physikalischen Rufnummern für die Verbindungsaufbauversuche zu bilden.

Empfängt die Steuereinheit PROZ2 eine positive Rückantwort, d. h. gelingt ein solcher Verbindungsaufbauversuch, so stoppt sie mit weiteren Verbindungsaufbauversuchen zu den restlichen noch verbleibenden Teilnehmeranschlußnetzen. Die Reihenfolge, in der die Verbindungsaufbauversuche erfolgen, kann hierbei zufällig gewählt werden oder fest vorgegeben sein.

Es ist vorteilhaft, diese Reihenfolgen durch statistische Auswertung von Verbindungsaufbauversuchen zu Endgeräten des Ziel-Teilnehmeranschlußbereich zu bestimmen. Beispielsweise wird zuerst ein Verbindungsaufbau über dasjenige Teilnehmeranschlußnetzes des Ziel-Teilnehmeranschlußbereich gestartet, über das die meisten Verbindungen aufgebaut werden. Durch laufende statistische Auswertung des Verbindungsaufbaus zu Endgeräten der verschiedenen Teilnehmeranschlußbereiche kann die Reihenfolge hierbei adaptiv an das Teilnehmerverhalten angepaßt werden.

Es ist hierbei auch möglich, daß Verbindungsaufbauversuche parallel zu mehreren Teilnehmeranschlußnetzen gestartet werden.

Die Überwachungseinheit SUP überwacht die Funktion der zentralen Steuereinheit SCP und der Verbindung zwischen der Vermittlungsstelle EX1 und der Steuereinheit SCP. Diese Überwachung wird dadurch realisiert, daß bei Senden einer Anforderung durch die Kommunikationseinheit KOM2 an die Steuereinheit SCP ein Timer gestartet wird, der den Eingang der Rückantwort überwacht. Kommt die Rückantwort nicht innerhalb einer bestimmten Zeitperiode an, so wird der Status der Verbindung und der Steuereinheit als nicht funktionsfähig eingeschätzt und die Umschalteeinheit angewiesen, von der Steuereinheit SCP auf die Steuereinheit PROZ2 umzuschalten. Empfängt die Überwachungseinheit SUP von der Steuereinheit SCP eine Nachricht, die anzeigt, daß die Steuereinheit und die Verbindung wieder funktionsfähig sind, so wird der Status der Verbindung und der Steuereinheit als funktionsfähig eingeschätzt und die Umschalteinheit angewiesen, von der Steuereinheit PROZ2 auf die Steuereinheit SCP umzuschalten.

Es ist auch möglich, daß die Überwachungseinheit SUP den Status der Steuereinheit SCP und der Verbindung zur Steuereinheit SCP auf andere Weise überwacht. Beispielsweise kann dies durch regelmäßiges Senden von Überwachungsnachrichten, die von der Steuereinheit SCP zurückgeschleift werden, geschehen. Solche Überwachungsnachrichten können auch ausschließlich dazu verwendet werden, den Zeitpunkt der erneuten Funktionsfähigkeit der Steuereinheit SCP und der Verbindung zur Steuereinheit SCP zu ermitteln.

Wie bereits oben ausgeführt, kann das erste Ausführungsbeispiel auch auf andere Verbindungsaufbauverfahren, Vermittlungsstellen und Kommunikationsnetze analog übertragen werden, bei denen eine für mehrere Vermittlungsstellen zentrale Steuereinheit für Leitweglenkungs-Funktionen verwenden wird.

Ein zweites Ausführungsbeispiel der Erfindung besteht somit beispielsweise darin, daß die zentralen Steuereinheiten einen UPT - Dienst (UPT = Universal Personal Telecomunication) erbringt, der eine logische Teilnehmerrufnummer in eine physikalische Netzadresse umwertet. Die logische Teilnehmerrufnummer kennzeichnet hierbei den gerufenen Teilnehmer und die physikalische Netzadresse dasjenige von mehreren möglichen Endgeräten, unter dem der Teilnehmer im Augenblick erreichbar ist. Bei diesem Ausführungsbeispiel sind die zentrale Steuereinheit, die mit ihr verbundenen Vermittlungsstellen und das Kommunikationsnetz, das die Vermittlungsstellen umfaßt wie nach Fig. 2 aufgebaut. Der einzige unterschied ist, daß die Datenstruktur und die Funktionseinheit PROZ1 an die spezielle UPT Umwertung angepaßt sind und wie für bekannte Verfahren in diesem Bereich aufgebaut sind. Die möglichen in der Steuereinheit PROZ2 realisierten Prozeduren sind weiter auf diejenigen Möglichkeiten eingeschränkt, die nicht mit einer Betreiberkennung arbeiten.

## Patentansprüche

1. Verfahren zum Aufbau einer Verbindung zwischen einem rufenden Teilnehmer (A) und einem gerufenen Teilnehmer (B), bei dem eine Verbindungsanforderung zum Aufbau der Verbindung von einem Endgerät (TE1) des rufenden Teilnehmers (A) an eine Vermittlungsstelle (EX1) eines Kommunikationsnetzes (LN12) geleitet wird und die Vermittlungsstelle (EX1) für die Bestimmung des Leitweges zu dem gerufenen Teilnehmer (B) auf eine für mehrere Vermittlungsstellen (EX1 bis EX3) zentrale erste Steuereinheit (SCP) zugreift, die eine erste Prozedur für die Bestimmung des Leitweges durchführt und das Ergebnis an die Vermittlungsstelle (EX1) zurückmeldet,
**dadurch gekennzeichnet,** daß die Vermittlungsstelle (EX1) den Ausfall der zentralen ersten Steureinheit (SCP) oder der Verbindung zu der zentralen ersten Steuereinheit (SCP) überwacht und daß die Vermittlungsstelle (EX1), wenn sie einen derartigen Ausfall detektiert, für die Bestimmung des Leitweges auf eine in der Vermittlungsstelle (EX1) integrierte zweite Steuereinheit (PROZ2) zugreift, die anstelle der ersten Prozedur eine alternative zweite Prozedur für die Bestimmung des Leitweges durchführt.

2. Verfahren nach Anspruch 1, dadurch gekennzeichnet, daß die erste Prozedur zu einer logischen Rufnummer des gerufenen Teilnehmers (B) eine physikalische Adresse eines Teilnehmeranschlußes, über den der gerufene Teilnehmer (B) erreichbar ist, ermittelt und diese an die Vermittlungsstelle (EX1) zurückmeldet.

3. Verfahren nach Anspruch 2, dadurch gekennzeichnet, daß die zweite Prozedur den rufenden Teilnehmer (A) auffordert, die physikalische Adresse des Teilnehmeranschlusses einzugeben.

4. Verfahren nach Anspruch 1, dadurch gekennzeichnet, daß die erste Prozedur zu einer Rufnummer des gerufenen Teilnehmers (B) dasjenige Teilnehmeranschlußnetz (LN22), über das der gerufenen Teilnehmer (B) erreichbar ist, von mehreren möglichen Teilnehmeranschlußnetzen (LN21 bis LN23) verschiedener Netzbetreiber ermittelt, die sich einen gemeinsamen Nummerierungsbereich teilen.

5. Verfahren nach Anspruch 4, dadurch gekennzeichnet, daß die zweite Prozedur den rufenden Teilnehmer (A) auffordert, eine Kennung des Teilnehmeranschlußnetzes (LN22) des gerufenen Teilnehmer (B) einzugeben und die Verbindungsanforderung in dieses Teilnehmeranschlußnetz (LN22) weiterleitet.

6. Verfahren nach Anspruch 4, dadurch gekennzeichnet, daß die zweite Prozedur den rufenden Teilnehmer (A) auffordert, eine Rufnummer mit der Kennung des Teilnehmeranschlußnetzes (LN22) des gerufenen Teilnehmer (B) einzugeben.

7. Verfahren nach Anspruch 1, dadurch gekennzeichnet, daß die zweite Prozedur eine andere Vermittlungsstelle bestimmt, die auf eine andere zentrale Steuereinheit zugreift, die ebenfalls die erste Prozedur durchführt, und die Weiterleitung der Verbindungsanforderung zu dieser Vermittlungsstelle veranlaßt.

8. Verfahren nach Anspruch 1, dadurch gekennzeichnet, daß die zweite Prozedur einen Übergang zu einem Kommunikationsnetz (LN11, LN13 bis LN23, TN1 bis TN2) eines anderen Netzbetreibers mit einer anderen zentralen Steuereinheit zur Bestimmung des Leitweges bestimmt und die Weiterleitung der Verbindungsanforderung in das Kommunikationsnetz dieses Netzbetreibers veranlaßt.

9. Verfahren nach Anspruch 1, dadurch gekennzeichnet, daß die zweite Prozedur durch versuchsweisen Aufbau einer oder mehrerer Verbindungen zu einem bzw. mehreren möglichen Kommunikationsnetzen (LN21 bis LN23) das Kommunikationsnetz des gerufenen Teilnehmers (B) ermittelt und die Weiterleitung der Verbindungsanforderung in dieses Kommunikationsnetz veranlaßt.

10. Verfahren nach Anspruch 1, dadurch gekennzeichnet, daß der versuchsweisen Aufbau einer oder mehrerer Verbindungen gemäß einer durch Auswertung statistischer Daten festgelegten Reihenfolge erfolgt.

11. Verfahren nach Anspruch 1, dadurch gekennzeichnet, daß die Vermittlungsstelle (EX1) als Dienstvermittlungsstelle auf die erste Steuereinheit (SCP) als Dienststeuereinrichtung gemäß der IN-Architektur zugreift.

12. Vermittlungsstelle (EX1) eines Kommunikationsnetzes (LN12) mit einer Kommunikationseinheit (KOM2) zum Zugriff auf eine für mehrere Vermittlungsstellen (EX11 bis EX13) zentralen ersten Steuereinheit (SCP) und mit einer Steuerung (RC), die so ausgestaltet ist, daß sie für die Bestimmung des Leitweges zwischen einem rufenden Teilnehmer (A) und einem gerufenen Teilnehmer (B) über die Kommunikationseinheit (KOM2) auf die zentrale erste Steuereinheit (SCP) zugreift, die eine erste Prozedur für die Bestimmung des Leitweges durchführt und das Ergebnis an die Vermittlungsstelle (EX1) zurückmeldet,
**dadurch gekennzeichnet,** daß die Steuerung (RC) mit einer Überwachungseinheit (SUP) zum Überwachen des Ausfalls der zentralen ersten Steureinheit (SCP) oder der Verbindung zu der zentralen ersten Steuereinheit (SCP) versehen ist, daß die Steuerung (RC) mit einer in die Vermittlungsstelle (EX1) integrierten zweiten Steuereinheit (PROZ2) zur Durchführung einer alternativen zweiten Prozedur für die Bestimmung des Leitweges versehen ist und daß die Steuerung (RC) so ausgestaltet ist, daß sie, wenn die Überwachungseinheit (SUP) einen derartigen Ausfall detektiert, für die Bestimmung des Leitweges auf die zweite Steuereinheit (PROZ2) zugreift, die dann anstelle der ersten Prozedur die zweite Prozedur durchführt.

13. Kommunikationsnetz mit mindestens einer Vermittlungsstelle (EX1 bis EX3) und mit einer für mehrere Vermittlungsstellen (EX1 bis EX3) zentralen ersten Steuereinheit (SCP), wobei die mindestens eine Vermittlungsstelle (EX1 bis EX3) jeweils mit einer Kommunikationseinheit (KOM2) zum Zugriff auf eine für mehrere Vermittlungsstellen (EX1 bis EX13) zentralen ersten Steuereinheit (SCP) und mit einer Steuerung (RC) versehen ist, die so ausgestaltet ist, daß sie für die Bestimmung des Leitweges zwischen einem rufenden Teilnehmer (A) und einem gerufenen Teilnehmer (B) über die Kommunikationseinheit (KOM2) auf die zentrale erste Steuereinheit (SCP) zugreift, die eine erste Prozedur für die Bestimmung des Leitweges durchführt und das Ergebnis an die Vermittlungsstelle (EX1) zurückmeldet,
**dadurch gekennzeichnet,** daß die Steuerung (RC) mit einer Überwachungseinheit (SUP) zum Überwachen des Ausfalls der zentralen ersten Steureinheit (SCP) oder der Verbindung zu der zentralen ersten Steuereinheit (SCP) versehen ist, daß die Steuerung (RC) mit einer in die Vermittlungsstelle (EX1) integrierten zweiten Steuereinheit (PROZ2) zur Durchführung einer alternativen zweiten Prozedur für die Bestimmung des Leitweges versehen ist und daß die Steuerung (RC) so ausgestaltet ist, daß sie, wenn die Überwachungseinheit (SUP) einen derartigen Ausfall detektiert, für die Bestimmung des Leitweges auf die zweite Steuereinheit (PROZ2) zugreift, die dann anstelle der ersten Prozedur die zweite Prozedur durchführt.
